# EUROPÄISCHE PATENTSCHRIFT

(11) **EP 1 524 164 B1**
(45) Veröffentlichungstag und Bekanntmachung des Hinweises auf die Patenterteilung: **01.02.2006**
(21) Anmeldenummer: 04022120.2
(22) Anmeldetag: 17.09.2004
(51) Int. Cl.: B61D 17/22, B60D 5/00

(54) **Innenwandverkleidung des Balges eines Übergangs zwischen zwei gelenkig miteinander verbundenen Fahrzeugen oder Fahrzeugteilen**
Internal liner for the bellows of a communication passage between two articulated vehicles, or parts of a vehicle
Garniture interne du soufflet d'un passage d'intercirculation entre deux véhicules, ou parties de véhicule, articulés

(30) Priorität: 16.10.2003 DE 10348049
(43) Veröffentlichungstag der Anmeldung: 20.04.2005
(73) Patentinhaber: HÜBNER GmbH, 34123 Kassel (DE)
(72) Erfinder:
(74) Vertreter: WALTHER, WALTHER & HINZ Patentanwälte - European Patent Attorneys

(56) Entgegenhaltungen:
- DE-C- 461 089
- FR-A- 2 625 160
- US-A- 447 054
- US-A- 2 217 600

## Beschreibung

Die vorliegende Erfindung betrifft eine Innenwandverkleidung des Balges eines Überganges zwischen zwei gelenkig miteinander verbundenen Fahrzeugen oder Fahrzeugteilen, umfassend mehrere Wandelemente, die durch eine Führungseinrichtung relativ zueinander verschieblich in dem Übergang angeordnet sind.

Aus der EP 0 625 459 ist eine Innenwandverkleidung eines Übergangs zwischen zwei Fahrzeugen, insbesondere eines Übergangs mit einem Faltenbalg bekannt, die nach Art einer in sich elastisch nachgiebig und um die Hochachse in Richtung der Mitte des Übergangs gewölbt ausgebildeten Platte ausgebildet ist. Diese Seitenwandabdeckung ist hierbei nachgiebig mit dem jeweiligen Fahrzeug bzw. Fahrzeugteil verbunden. Eine solche Innenwandverkleidung baucht sich bei Kurvenfahrt des Gelenkzuges auf der Kurveninnenseite in Richtung auf das Innere des Übergangs zu aus, währenddessen auf der Kurvenaußenseite die Innenwandverkleidung gelängt wird, was insbesondere dadurch geschieht, dass zum einen die Innenwandverkleidung eine gewisse Vorwölbung aufweist, und zum anderen dadurch, dass die Innenwandverkleidung im Bereich der Anlenkung an die Fahrzeugteile elastisch nachgiebig ausgebildet ist.

Eine ganz ähnliche Innenwandverkleidung ist im Übrigen aus der EP 0 722 874 bekannt.

Nachteilig bei diesen beiden zuvor genannten Ausführungsformen einer Innenwandverkleidung ist, dass das Material für die Innenwandverkleidung relativ aufwendig ist, da die Anforderungen an die elastische Verformung des Materials sehr hoch sind, was einen hohen Preis für eine solche Innenwandverkleidung bedingt. Gleichwohl ist festzuhalten, dass die bekannte Innenwandverkleidung durchaus ihren Zweck erfüllt, nämlich zum einen dem Schutz des Balges vor Vandalismus, und zum anderen eine bessere optische Darstellung des Übergangsinnenraumes als solchen.

Des Weiteren ist eine Innenwandverkleidung bekannt (siehe z.B. die US-447,054), die aus drei einzelnen Wandelementen besteht, wobei zwei der Wandelemente relativ zu dem dritten Wandelement verschieblich ausgebildet sind. Zur Führung der Wandelemente ist am oberen und am unteren Ende ein Scherenarm vorgesehen, der bewirkt, dass die Wandelemente sich bei durch Kurvenfahrt hervorgerufener Bewegung synchron bewegen. Die äußeren Wandelemente sind darüber hinaus vertikal beweglich angeordnet, um zu gewährleisten, dass beispielsweise bei Nickbewegungen der Fahrzeugteile bzw. der Fahrzeuge relativ zueinander und einem entsprechenden Höhenversatz der Fahrzeuge relativ zueinander die entsprechende Bewegung durch die Wandverkleidung nachempfunden werden kann. Um einen solchen Höhenversatz zu ermöglichen, ist an jedem Fahrzeugteil bzw. Fahrzeug eine vertikale Stange zur Aufnahme des Wandelementes vorgesehen, wobei das Wandelement auf der Stange in vertikaler Richtung federnd gelagert ist. Darüber hinaus sind am oberen und am unteren Ende der Wandelemente Spaltabdeckungen vorgesehen. Erkennbar ist, dass die zuvor beschriebene Wandabdeckung sehr aufwendig und auch entsprechend teuer ist, was insbesondere auch durch die Verwendung der beiden Scherenarme bedingt ist.

Der Erfindung liegt daher die Aufgabe zu Grunde, eine Innenwandverkleidung der eingangs genannten Art bereitzustellen, deren Führungselemente zum einen nicht sichtbar sind, und die mit einer minimalen Anzahl von Teilen auskommt, um die Innenwandverkleidung preiswert herstellen zu können. Darüber hinaus soll gewährleistet sein, dass die Wandelemente, die relativ zueinander beweglich sind, sich nicht voneinander abheben lassen.

Die Aufgabe wird erfindungsgemäß dadurch gelöst, dass die Führungseinrichtung mindestens einen an dem einen Wandelement angeordneten, parallel und beabstandet zu dem Wandelement verlaufenden Führungsarm umfasst, wobei der Führungsarm das andere Wandelement verschieblich aufnimmt, wobei der Abstand zwischen dem einen Wandelement und dem Führungsarm etwa der Stärke des anderen Wandelements entspricht. Hieraus wird deutlich, dass die erfindungsgemäße Innenwandverkleidung mit zwei Wandelementen auskommt. Entsprechend gering ist die Anzahl der Mittel, die zur Führung der Wandelemente erforderlich sind, was den Preis einer solchen Innenwandverkleidung deutlich nach unten reduziert. Darüber hinaus ist durch die U-förmige Anordnung des Führungsarms an dem einen Wandelement zur Aufnahme des anderen Wandelementes eine derart steife Verbindung zwischen den beiden Wandelementen hergestellt, dass das eine Wandelement von dem anderen Wandelement nicht oder nur mit erheblichem Aufwand abhebbar ist, so dass zum einen die Gefahr der Zerstörung, und zum anderen allerdings auch die Gefahr des Einquetschens von Fingern im Wesentlichen vermieden ist. Zusätzlich können im Bereich des Übergangs allerdings noch Dichtlippen vorgesehen sein, um den Übergang optisch anspruchsvoller zu gestalten sowie auch eine zusätzliche Sicherheit gegen das Eindringen mit Gegenständen bzw. mit den Fingern zu ermöglichen.

Nach einem besonderen Merkmal der Erfindung ist vorgesehen, dass die Wandelemente jeweils um eine vertikale Achse durch ein Scharnier schwenkbeweglich an dem jeweiligen Fahrzeug oder Fahrzeugteil angeordnet sind, um bei Kurvenfahrt der Fahrzeuge bzw. Fahrzeugteile der hieraus resultierenden entsprechenden Bewegung nachgeben zu können. Zum Anbau der Innenwandverkleidung bzw. auch, um den Zugang zum Balg von innen her zu ermöglichen, ist vorgesehen, dass das Scharnier lösbar an dem Fahrzeug oder Fahrzeugteil angeordnet ist. Hierzu kann ein Bolzen vorgesehen sein, der in eine Buchse einführbar ist, wobei die Fixierung des Bolzens in der Buchse z. B. durch Schrauben erfolgt.

Nach einem weiteren besonderen Merkmal der Erfindung zeigt der Führungsarm eine Führungshülse, wobei die Führungshülse schwenkbeweglich an dem anderen Wandelement angeordnet ist. Durch die Ausbildung der Führung als Führungshülse, die auf dem Führungsarm längsbeweglich angeordnet ist, wird eine sehr stabile Verbindung bereitgestellt, was sich insbesondere dahingehend auswirkt, dass das Abheben der beiden Wandelemente voneinander schwierig oder unmöglich ist. Die schwenkbewegliche Anordnung der Führungshülse an dem anderen Wandteil bewirkt, dass bei einem Höhenversatz der Fahrzeugteile bzw. der Fahrzeuge relativ zueinander, was die Folge von Nickbewegungen der Fahrzeuge bzw. Fahrzeugteile beim Fahren der Fahrzeuge über eine Kuppe oder durch eine Senke ist, der hierfür erforderliche Versatz der beiden Wandelemente in der Höhe möglich ist. In diesem Zusammenhang bleibt zu erwähnen, dass auch der Führungsarm an dem einen Wandelement schwenkbeweglich angeordnet ist.

Im Einzelnen zeigt das eine Wandelement einen Lagerbock, an dem der Führungsarm schwenkbeweglich angeordnet ist.

Darüber hinaus sind zwischen Führungshülse und Führungsarm Mittel zur Begrenzung des Weges der Führungshülse auf dem Führungsarm vorgesehen, um ein Auseinanderziehen der beiden Wandelemente, mit der Folge der Bildung eines Vertikalspaltes zu vermeiden.

Anhand der Zeichnungen wird die Erfindung nachstehend beispielhaft näher erläutert.
- Figur 1: zeigt die Innenwandverkleidung als solche in perspektivischer Darstellung;
- Figur 2: zeigt einen Schnitt durch die Innenwandverkleidung gemäß Figur 1 entsprechend der Linie II - II aus Figur 1.

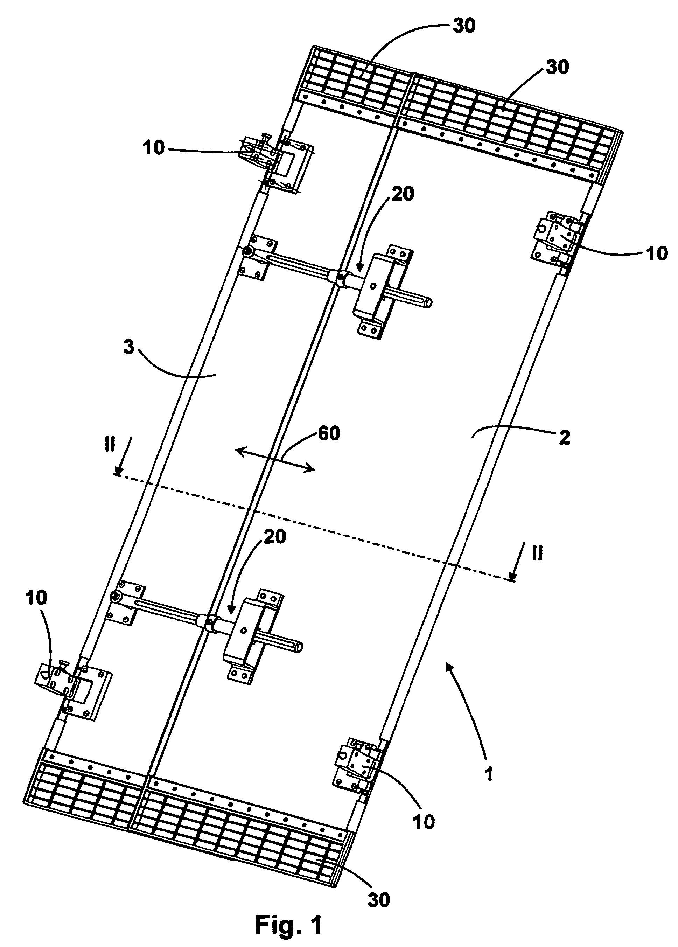

Die Innenwandverkleidung 1 gemäß Figur 1 besteht aus den beiden Wandelementen 2 und 3. Die Wandelemente 2 und 3 besitzen an ihren Stirnseiten jeweils ein oberes und ein unteres Scharnier 10. Zur Verbindung der beiden Wandelemente 2, 3 untereinander sind zwei übereinander angeordnete Führungseinrichtungen 20 vorgesehen. Am oberen und am unteren Ende eines jeden Wandelementes 2, 3 ist darüber hinaus eine elastische Spaltabdeckung 30 angeordnet.

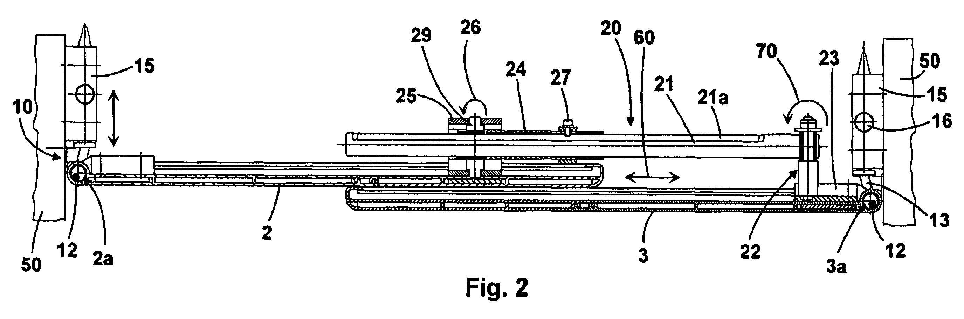

Die Ausbildung der Führungseinrichtungseinrichtung 20 ergibt sich insbesondere aus der Figur 2. So ist aus Figur 2 der Führungsarm 21 erkennbar, der durch den insgesamt mit 22 bezeichneten Lagerbock schwenkbeweglich an dem einen Wandelement 3 befestigt ist. Der Lagerbock 22 lagert auf einer Montageplatte 23, die mit dem Wandelement 3 durch Schrauben verbunden ist. Der Führungsarm 21, der schwenkbeweglich von dem Lagerbock 22 aufgenommen wird, zeigt eine Führungshülse 24, wobei die Führungshülse 24 von einer Manschette 25 aufgenommen ist, die ähnlich einer Brücke an der Rückseite des anderen Wandelementes 2 befestigt ist, wie sich dies besonders deutlich aus der Figur 1 ergibt. Wesentlich ist, dass die Führungshülse 24 von der Manschette 25 schwenkbeweglich entsprechend dem Pfeil 26 von der Manschette 25 aufnehmbar ist. Zur schwenkbeweglichen Aufnahme der Führungshülse 24 in der brückenartigen Manschette 25 auf der Rückseite des anderen Wandelementes entsprechend dem Pfeil 26 dient die Achse 29.

Der Führungsarm 21 besitzt darüber hinaus eine Nut 21 a, in der ein Sicherungsstift 27 geführt ist, der an der Führungshülse 24 angeordnet ist. Die Nut 21 a erstreckt sich über im Wesentlichen die gesamte Länge des Führungsarmes 21 und dient in Verbindung mit dem Sicherungsstift 27 dazu zu verhindern, dass die Wandelemente auseinandergezogen werden.

Ein jedes der beiden Wandelemente 2, 3 ist an seiner jeweiligen Stirnseite durch Scharniere 10 mit dem Fahrzeugteil 50 verbunden. Das Scharnier 10 umfasst hierbei das Gelenkauge 2a, 3a zur Aufnahme eines Bolzens 12, an dem der Scharnierarm 13 angelenkt ist, der durch die am Fahrzeugteil angeordnete Buchse lösbar aufnehmbar ist. Zur Fixierung des Scharnierarmes 13 in der Buchse 15 dient eine Madenschraube 16, die den Scharnierarm 13 in der Buchse klemmend erfasst.

Die Funktionsweise der Innenwandverkleidung ist nun derart, dass sich bei Kurvenfahrt die beiden Wandelemente 2, 3 entsprechend dem Pfeil 60 relativ zueinander verschieben, wie sich dies aus Figur 2 ergibt. Bei einem Höhenversatz der beiden Fahrzeugteile erfolgt ein Ausgleich zwischen den beiden Wandelementen durch Verschwenken des Führungsarmes 21 um den Lagerbock 22 entsprechend dem Pfeil 70 bei gleichzeitiger Verschwenkung der Führungshülse 24 um die Achse 29 entsprechend dem Pfeil 26. Die sich hierbei am unteren bzw. am oberen Ende der Wandelemente ergebenden Spalte werden durch die elastische Spaltabdeckung 30 abgedeckt

## Patentansprüche

1. Innenwandverkleidung (1) des Balges eines Übergangs zwischen zwei gelenkig miteinander verbundenen Fahrzeugen oder Fahrzeugteilen, umfassend mehrere Wandelemente (2, 3), die durch eine Führungseinrichtung (20) relativ zueinander verschieblich in dem Übergang angeordnet sind,
**dadurch gekennzeichnet,**
**dass** die Führungseinrichtung (20) mindestens einen an dem einen Wandelement (3) angeordneten parallel und beabstandet zu dem einen Wandelement (3) verlaufenden Führungsarm (21) umfasst, wobei der Führungsarm (21) das andere Wandelement (2) verschieblich aufnimmt, wobei der Abstand zwischen dem einen Wandelement (3) und dem Führungsarm (21) etwa der Stärke des anderen Wandelementes (2) entspricht.

2. Innenwandverkleidung (1) nach Anspruch 1,
**dadurch gekennzeichnet,**
**dass** die Wandelemente (2, 3) jeweils um eine vertikale Achse durch ein Scharnier (10) schwenkbeweglich an dem jeweiligen Fahrzeug oder Fahrzeugteil (50) angeordnet sind.

3. Innenwandverkleidung (1) nach Anspruch 2,
**dadurch gekennzeichnet,**
**dass** das Scharnier (10) lösbar an dem Fahrzeug oder Fahrzeugteil (50) angeordnet ist.

4. Innenwandverkleidung (1) nach Anspruch 1,
**dadurch gekennzeichnet,**
**dass** der Führungsarm (21) eine Führungshülse (24) aufweist, wobei die Führungshülse (24) schwenkbeweglich an dem anderen Wandelement (2) angeordnet ist.

5. Innenwandverkleidung (1) nach Anspruch 4,
**dadurch gekennzeichnet,**
**dass** der Führungsarm (21) an dem einen Wandelement (3) schwenkbeweglich angeordnet ist.

6. Innenwandverkleidung (1) nach Anspruch5,
**dadurch gekennzeichnet,**
**dass** das eine Wandelement (3) einen Lagerbock (22) aufweist, an dem der Führungsarm (21) schwenkbeweglich angeordnet ist.

7. Innenwandverkleidung (1) nach Anspruch 4,
**dadurch gekennzeichnet,**
**dass** zwischen der Führungshülse (24) und dem Führungsarm (21) Mittel (27) zur Begrenzung des Weges der Führungshülse (24) auf dem Führungsarm (21) vorgesehen sind.

## Revendications

1. Revêtement de paroi intérieure (1) du soufflet d'une intercirculation entre deux véhicules ou parties de véhicule articulés, du type comportant plusieurs éléments de paroi (2, 3) montés à coulissement les uns par rapport aux autres dans l'intercirculation par l'intermédiaire d'un organe de guidage (20)
**caractérisé en ce**
**que** l'organe de guidage (20) comprend au moins un bras de guidage (21) disposé à distance sur l'un des éléments de paroi (3) auquel il est parallèle, le bras de guidage (21) recevant à coulissement l'autre élément de paroi (2), la distance entre l'un des éléments de paroi (3) et le bras de guidage (21) correspondant environ à l'épaisseur de l'autre élément de paroi (2).

2. Revêtement de paroi intérieure (1) selon la revendication 1,
**caractérisé en ce**
**que** les éléments de paroi (2, 3) sont disposés chacun mobile en pivotement autour d'un axe vertical sur une charnière (10) sur le véhicule ou la partie de véhicule respective (50).

3. Revêtement de paroi intérieure (1) selon la revendication 2,
**caractérisé en ce**
**que** la charnière (10) est montée de façon amovible sur le véhicule ou la partie de véhicule (50).

4. Revêtement de paroi intérieure (1) selon la revendication 1,
**caractérisé en ce**
**que** le bras de guidage (21) comporte une gaine de guidage (24), ladite gaine de guidage (24) étant montée mobile en pivotement sur l'autre élément de paroi (2).

5. Revêtement de paroi intérieure (1) selon la revendication 4,
**caractérisé en ce**
**que** le bras de guidage (21) est monté mobile en pivotement sur l'un des éléments de paroi (3).

6. Revêtement de paroi intérieure (1) selon la revendication 5,
**caractérisé en ce**
**que** l'un des éléments de paroi (3) comporte un support de palier (22) sur lequel le bras de guidage (21) est monté mobile en pivotement.

7. Revêtement de paroi intérieure (1) selon la revendication 4,
**caractérisé en ce**
**que** des moyens (27) limiteurs de course de la gaine de guidage (24) sont prévus sur le bras de guidage (21) entre la gaine de guidage (24) et le bras de guidage (21).

## Claims

1. An inner wall lining (1) of the bellows of a connection between two hinge-linked vehicles or vehicle parts, said inner wall lining comprising several wall elements (2, 3) that are disposed within the connection so as to be slidable relative to each other via a guide device (20),
**characterized in**
**that** the guide device (20) includes at least one guide arm (21) that is disposed on the one wall element (2, 3) and is oriented parallel to and at a distance of said wall element (2, 3), said guide arm (21) slidably receiving the other wall element (2), the distance between the one wall element (3) and the guide arm (21) corresponding approximately to the thickness of the other wall element (2).

2. The inner wall lining (1) in accordance with claim 1,
**characterized in**
**that** a respective one of the wall elements (2, 3) is disposed on the respective one of the vehicles or vehicle parts (50) in such a manner that it is pivotal on a hinge (10) about a vertical axis.

3. The inner wall lining (1) in accordance with claim 2,
**characterized in**
**that** the hinge (10) is releasably disposed on the vehicle or vehicle part (50).

4. The inner wall lining (1) in accordance with claim 1,
**characterized in**
**that** the guide arm (21) comprises a guide sleeve (24), said guide sleeve (24) being pivotally disposed on the other wall element (2).

5. The inner wall lining (1) in accordance with claim 4,
**characterized in**
**that** the guide arm (21) is pivotally disposed on the one wall element (3).

6. The inner wall lining (1) in accordance with claim 5,
**characterized in**
**that** the one wall element (3) comprises a bearing pillow (22) on which the guide arm (21) is pivotally disposed.

7. The inner wall lining (1) in accordance with claim 4,
**characterized in**
**that** means (27) for limiting the travel of the guide sleeve (24) on the guide arm (21) are provided between the guide sleeve (24) and the guide arm (21).
